# EUROPEAN PATENT SPECIFICATION

(11) **EP 2 552 037 B1**
(45) Date of publication and mention of the grant of the patent: **21.11.2018**
(21) Application number: 11290338.0
(22) Date of filing: 26.07.2011
(51) Int. Cl.: H04Q 11/00, H04J 14/02, H04B 10/2513

(54) **Synchronisation equipment and associated method**
Synchronisationsgerät und zugehöriges Verfahren
Équipement de synchronisation et procédé associé

(43) Date of publication of application: 30.01.2013
(73) Proprietor: Provenance Asset Group LLC, Essex, CT 06426 (US)
(72) Inventor: Zami, Thierry, 91620 Nozay (FR); Etienne, Sophie, 91620 Nozay (FR)
(74) Representative: Croonenbroek, Thomas Jakob

(56) References cited:
- EP-A1- 0 657 754
- EP-A1- 1 986 361
- US-A1- 2005 147 411
- US-A1- 2009 129 780

## Description

### BACKGROUND OF THE INVENTION

The present invention relates to the field of optical transmissions and in particular of the synchronization of optical signals.
The telecommunication networks of the state of the art are organized in different layers from the access layer to the core layer through the metro or distribution layer.
Needs for the three layers are different as the traffic in the access network is very bursty and therefore requires a small granularity, to handle data while maximizing resources whereas signals in the core layer correspond to the aggregation of the signals coming from the access layer through the metro layer so that the traffic in the core layer is more stable. Thus, the core layer uses circuit transmission technology where resources are reserved almost permanently for a given connection whereas the access layer uses packet switching technologies wherein resources are shared between different connections with a packet granularity.

In the case of the metro layer, which is the intermediate layer between the access and the core layer, the trend until now was to use circuit transmission technologies. However, as the traffic is more bursty than in the core layer, some resources are wasted which becomes a problem as the operators tend to optimize the use of their resources to increase their networks capacities.

Thus, a proposed solution of the state of the art is to develop point to multi-point connections in the metro layer which is generally a ring line so that fast switching elements are required only on the reception side of the nodes which provides an improvement of the use of resources while limiting the required investments to modify the existing infrastructures.

However, in order to use fast switching elements and retrieve the transmitted packets, synchronization of the different multiplexed signals received at destination is necessary in order to avoid losses of data.

Indeed, signals are transmitted through a plurality of multiplexed channels using wavelength division multiplexing technology which means that the different channels are transmitted on different wavelengths and therefore undergone different chromatic dispersion leading to temporal shifts between the packets at the reception node.

In order to overcome this problem, chromatic dispersion compensation methods have been disclosed in the state of the art such as fibers featuring negative chromatic dispersion implemented from node to node. However, such solution is not adapted to the future evolution of networks using advanced modulation formats such as Polarization-Division Multiplexed-Quadrature Phase Shift Keying (PDM-QPSK) with coherent detection as such type of detection is more effective without chromatic dispersion compensation.

Furthermore, the implementation of active elements along the line handling each wavelength separately requires extra filtering stages and introduces additional losses impacting the transmission reach of the optical signals.

### SUMMARY OF THE INVENTION

It is therefore an object of the present invention to provide a solution allowing synchronization of the optical signals while overcoming the above-mentioned drawbacks.

Thus, the present invention refers to a synchronization device for synchronizing a plurality of multiplexed optical signals after transmission through a plurality of wavelength division multiplexing channels along an optical line, the said optical signals comprising data packets aimed at being detected separately and inter-packet gaps, the duration of a data packet and an inner-packet gap corresponding to duration of a time slot, the said synchronization device comprising:
- a plurality of delay lines having distinct fixed delays,
- a wavelength selective switch is configured to:
- receive the said plurality of multiplexed optical signals,
- demultiplex the said plurality of received multiplexed optical signals and,
- distribute the demultiplexed optical signals toward the said plurality of delay lines according to a temporal shift of the demultiplexed optical signals with respect to the start of the next period of a periodic temporal reference corresponding to the duration of a time slot, a demultiplexed optical signal being transmitted to a delay line having the closest fixed delay with respect to the temporal shift of the said optical demultiplexed optical signal,
   and wherein the number of delay lines is determined according to the required accuracy for the synchronization of the optical signals,
   the synchronization device also comprises a plurality of optical calculators, the number of which corresponds to the number of delay lines, located between the wavelength selective switch and the plurality of delay lines, the said delay lines being looped on the said optical calculators so that the synchronized optical signals at the output of the delay lines are sent back to the wavelength selective switch to be demultiplexed and wherein the wavelength selective switch is also configured to multiplex the demultiplexed synchronized optical signals received from the plurality of delay lines.

According to another embodiment of the present invention, the synchronization device comprises control means adapted to:
- receive information about a change in the temporal shift of demultiplexed optical signals with respect to the start of the next period of a periodic temporal reference,
- compare the said temporal shift with a predetermined value over time in order to detect a drift of the said temporal shift,
   in case of a drift of the said temporal shift larger than the predetermined value on at least one channel,
- trigger a reconfiguration of the wavelength selective switch to adapt the distribution of the demultiplexed optical signals toward the plurality of delay lines to take into account the drift of the said temporal shift.

According to another embodiment of the present invention, the time slots are of equal duration and wherein the delays of the delay lines correspond to an arithmetic progression with an increment equal to the duration of the time slot divided by the number of delay lines.

According to a further embodiment of the present invention, the required accuracy for the synchronization of the optical signals is related to a desired ratio between the inter-packet gap duration and the duration of the time slot so that the number of delay lines is determined in function of the said desired ratio, the required number of delay lines being equal to the closest integer being equal or higher than two divided by the said desired ratio.

The embodiments of the present invention also refer to an optical node located in a point to multi-point optical line transmitting optical signals comprising data packets through wavelength division multiplexing channels, the said optical node comprising:
- a reception equipment and,
- an optical coupler configured to transmit the optical signals received on the line toward the reception equipment,
wherein the reception equipment comprises:
- a synchronization device in accordance with one of the previous claims,
- at least one wavelength selector linked to the synchronization equipment configured to select a wavelength channel comprising a data packets needing to be dropped,
- at least one burst mode receiver linked to the at least one wavelength selector configured to retrieve data of the data packets transmitted by the said at least one wavelength selector.

According to another embodiment of the present invention, the optical node comprises a second synchronization device set in parallel of the first synchronization device and a first and a second fast switching optical gate linked respectively to the first and second synchronization equipment and configured so that the first fast switching optical gate is in a passing mode while the second is in a blocking mode and conversely in order to transmit the optical signals outputted by one of the synchronization device and allow reconfiguration of a synchronization device without loosing data.

According to a further embodiment of the present invention, the optical node comprises an optical amplifier in between the at least one synchronization device and the at least one wavelength selector.

The embodiments of the present invention also refer to a method for synchronizing a plurality of multiplexed optical signals after transmission through a plurality of wavelength division multiplexing channels along an optical line, the said optical signals comprising data packets aimed at being detected separately and inter-packet gaps, the duration of a data packet and an inner-packet gap corresponding to the duration of a time slot, the said method comprising the following steps:
- demultiplexing the said plurality of received multiplexed optical signals with a wavelength selective switch and,
- distributing, with the said wavelength selective switch, the demultiplexed optical signals toward a plurality of delay lines having fixed distinct delays according to a temporal shift of the demultiplexed optical signals with respect to the start of the next period of a periodic temporal reference corresponding to the duration of a time slot, a demultiplexed optical signal being transmitted to a delay line having the closest fixed delay with respect to the temporal shift of the said demultiplexed optical signal, the number of delay lines being determined according to the required accuracy for the synchronization of the optical signals,
- multiplexing the synchronized optical signals at the outputs of the delay lines by the said wavelength selective switch using a plurality of optical calculators, the number of which corresponds to the number of delay lines, located between the wavelength selective switch and the plurality of delay lines, the said delay lines being looped on the said optical calculators so that the synchronized optical signals at the output of the delay lines are sent back to the wavelength selective switch.

According to a further embodiment of the present invention, the method is such that:
- the time slots are of equal duration,
- the delays of the delay lines corresponds to an arithmetic progression with an increment corresponding to the duration of the time slot divided by the number of delay lines,
- the number of delay lines is determined in function of the desired ratio between the inter-packet gap duration and the time slot duration, the required number of delay lines being equal to the closest integer being equal or higher than two divided by the said desired ratio.

According to an additional embodiment of the present invention, in case of a drift of the temporal shift on at least one of the channels larger than a predetermined value, the wavelength selective switch is reconfigured in order to adapt the distribution according to the modified values of the temporal shift.

According to another embodiment of the present invention, the predetermined value corresponds to a drift of half the delay increment.

### BRIEF DESCRIPTION OF THE DRAWINGS

FIG.**1** is a diagram of an example embodiment of a metro layer configured as a WDM ring network;
FIG.**2** is a diagram of a first embodiment of the structure of an optical node of the ring network presented in Fig.1.
FIG.**3** is a diagram of a synchronization device according to a first embodiment;
FIG.**4** is a representation of the effect of the chromatic dispersion on the synchronization of the packets after transmission along an optical line.
FIG.**5** is a representation of the result of a synchronization process on the received packets represented in fig.4.
FIG**.6** is a diagram of a second embodiment of the structure of an optical node of the ring network presented in Fig.1.
FIG.**7** is a diagram of a third embodiment of the structure of an optical node of the ring network presented in Fig.1.
FIG.**8** is a diagram of a synchronization device according to a second embodiment of the present invention;
FIG**.9** is a diagram of a detailed structure of an optical node according to a given configuration;

### DETAILED DESCRIPTION OF THE INVENTION

As used herein, the term "WDM" refers to the acronym Wavelength Division Multiplexing;

As used herein, the term "WSS" refers to the acronym Wavelength Selective Switch;

As used herein, the term "dB" refers to the decibel unit;

The embodiments of the present invention refer to a method for synchronizing optical signals having undergone temporal shift due to chromatic dispersion during transmission through wavelength division multiplexing channels, said optical signals comprising optical packets.

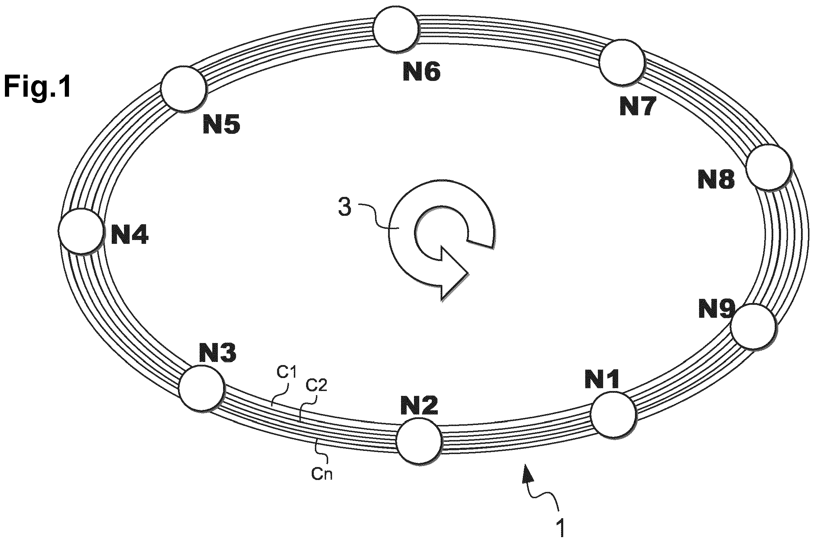

Fig.1 represents an example of metro layer network in the shape of a WDM ring configured for point-to-multipoint connections wherein a packet granularity is required at reception. Nevertheless, it has to be noted that the present invention is not limited to a ring network but can be applied to any point-to-multipoint line configuration.

This ring comprises 9 optical nodes Ni with i=1...9, the said nodes Ni being linked by an optical line 1 comprising a plurality of channels noted Cj with j=1...n. The transmission is achieved in only one direction along the ring line, for example the clockwise direction as indicated by the arrow 3.

Each node Ni has a set of channels reserved for its transmission toward the other nodes Ni so that it can emit signals according to a circuit transmission technology and a unique channel can be used to transmit data packets toward different nodes Ni.

Thus, at the destination node, fast switching elements are necessary for selecting and retrieving the dropped packets.

However, in order to allow the processing of the data packets received on the plurality of channels Cj by a unique device, synchronisation between the signals of the different channels is needed in order to compensate for the different temporal shifts induced by the difference of chromatic dispersion undergone by the said optical signals.

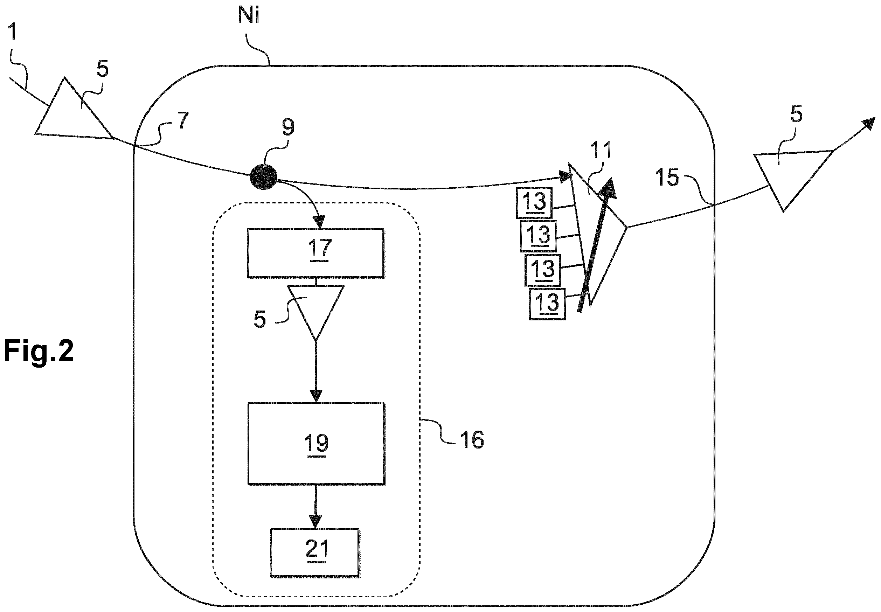

Figure 2 represents a diagram of an example of an optical node Ni architecture based on an off-line synchronization of the optical signals.

The optical line 1 is connected to an input 7 of the node Ni. An optical amplifier 5, for example an Erbium-Doped Fiber Amplifier (EDFA), is also located on the optical line 1 just before the node Ni to compensate for the power loss undergone during transmission along the optical line 1 and to anticipate a power loss induced in the node Ni.

Nevertheless, it has to be noted that the optical amplifiers 5 represented in Fig.2 and also in the following of the description may be optional if the signal power is high enough to provide the desired signal to noise ratio at destination.

Within the node Ni, the optical line 1 is linked to an optical coupler 9. In general, the used optical couplers 9 are 3dB couplers so that half of the signal power received on the input is transmitted toward both outputs. Thus, the received optical signals are transmitted toward two different directions:
- On one side, corresponding to the in-line side, to a multiplexer 11 to be multiplexed with the optical signals emitted by the said node Ni. Depending on the wavelength allocation technique used, static or dynamic, the multiplexer 11 is a fixed wavelength multiplexer (in the static case) or a wavelength selective switch (WSS) (in the dynamic case), the optical signals being emitted by a plurality of transmitters 13. The output of the multiplexer 11 being linked to an output 15 of the node Ni. An amplifier 5 is also implemented on the line 1 just after the node Ni. Thus, the signals being transmitted on the in-line side to subsequent nodes are not impacted by reception processing elements which maximizes the transmission reach along the line 1.
- On the other side, corresponding to the off-line side, optical signals are transmitted to a reception equipment 16 comprising a synchronization device 17 which will be described in more details in the following of the description and equipments allowing to retrieve data from the optical signals being dropped in the node Ni. Thus, at the output of the synchronization device 17, signals are sent to an optical amplifier 5 and then to a wavelength selector 19 to select only the channels needing to be dropped. Indeed, at the optical coupler 9, all the channels Cj have been transmitted on both sides such that optical signals having a destination different then node Ni are also received at the wavelength selector 19 level. The channels having a destination different than Ni are therefore filtered by the said wavelength selector 19 and the other channels are transmitted to a burst mode receiver 21. However, it has to be noted that such filtering of the channels Cj can also be achieved by the synchronization device 17 (by the filtering capacity of the WSS 25 of said synchronization device 17). Thanks to the synchronization of the optical signals achieved in the synchronization device 17 level, the burst mode receiver 21 can therefore process signals corresponding to several channels Cj at a time.

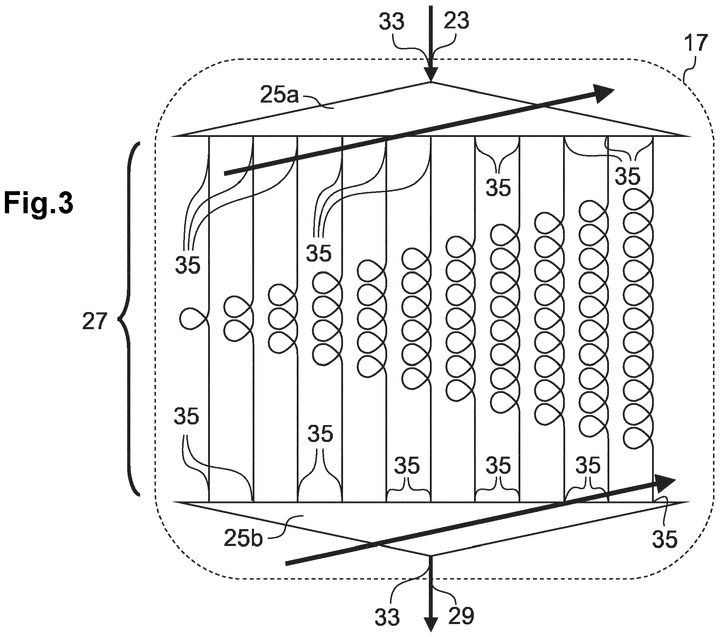

Fig.3 represents a diagram of the structure of a first embodiment of the synchronization device 17.

The multiplexed optical signals received at the input 23 of the synchronization device 17 are sent to the multiplexed port 33 of a first wavelength selective switch 25 having a plurality of demultiplexed ports 35 linked to a plurality of delay lines 27. The WSS 25 is configured to receive and demultiplex the optical signals transmitted on the different channels Cj and distribute the said demultiplexed signals toward the delay lines 27 according to their undergone temporal shift.

Each delay line 27 presents a fixed delay which is distinct or different than the delay presented by the other delay lines 27. In the present embodiment, the delays of the delay lines 27 correspond to the members of an arithmetic progression having a predetermined increment and the value of the said increment, which is linked to the number of delay lines 27, is determined in function of the accuracy required for the synchronization.

Indeed, the largest required delay corresponds to the duration of a time slot of the optical signal, the said time slot corresponding to the duration of a packet (header+payload) and an inter-packet gap, said duration being the same for all the packets within the considered network. The increment corresponds therefore to a time slot duration divided by the number of delay lines 27.

As a consequence, the larger the number of delay lines 27, the smaller the increment between the delays of two consecutive delay lines 27 and the more accurate the synchronization.

Besides, the accuracy of the synchronization is also linked to the ratio between the inter-packet gap duration and the time slot duration. Indeed, the more accurate the synchronization, the smaller the required ratio between the inter-packet gap duration and the time slot duration. In practice, clients make requests comprising their desired ratio between the inter-packet gap duration and the time slot duration. Thus, if the desired ratio between the inter-packet gap duration and the time slot duration is 10%, the synchronization accuracy needs to be 5% of the time slot duration so that the required number of lines is 1/5%=20. The required number of delay lines is therefore equal to the closest integer being equal or higher than two divided by the ratio between the inter-packet gap duration and the time slot duration.

The number of delay lines 27 of the synchronization device is therefore independent of the number of wavelength channels received on its input 23.

Furthermore, it is obvious that the optical signals corresponding to several channels Cj can be sent to a common delay line 27 which is the case when the temporal shift due to chromatic dispersion undergone by said optical signals is approximatively the same, that is to say, when the difference between the said temporal shift is smaller than half the delay increment.

The delay lines 27 are also linked on their other side corresponding to the outputs of the said delay lines 27 to a second WSS 25. This second WSS 25 is configured to receive and multiplex the optical signals received from the plurality of delay lines 27 and being synchronized. Thus, the configuration of the said second WSS 25 is the same as the first WSS 25 but used in the opposite direction to re-multiplexed the plurality of optical signals into one multiplexed signal to be transmitted toward the output 29 of the synchronization device.

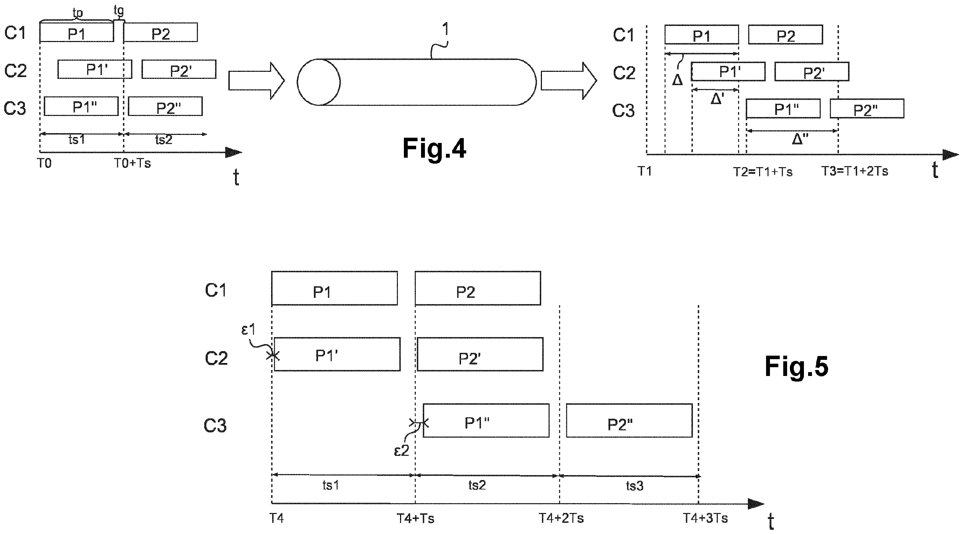

Fig.4 represents the effect of the chromatic dispersion on the synchronisation of the optical packets. In the present example, three different channels C1, C2 and C3 are considered. The left part of the figure represents the packets synchronisation during emission at the ingress node also called source node, the x-axis representing the time t. Two packets for each channel are represented. The packets of the different channels are obviously perfectly synchronized at the emission. Thus at time T0, packets P1, P1' and P1" start to be emitted in a time slot ts1 corresponding to the packet duration tp.(comprising the header and the payload) and the inter-packet gap tg and at time To+Ts where Ts is a time slot duration, packets P2, P2' and P2" start to be emitted in a time slot ts2.

Moreover, it has to be noticed that in the present invention, all the packets, inter-packet gaps and therefore time slots have all the same duration for all the optical signals within the considered network.

The right part of the figure represents the reception of the packets after transmission through the optical line 1. Channel C3 corresponds to the channel having undergone the highest chromatic dispersion and is considered as the temporal reference, however, any other temporal reference can be considered. Thus, packet P" is received at time T1. However, due to the difference of wavelength of their respective channel and consequently to the different chromatic dispersion undergone by the said channels, P1' and P1 present, at destination, a different temporal shift with respect to packet PI" which is herein the temporal reference corresponding to two time differences noted respectively Δ' and Δ". Thus, PI' starts to be received at time T1-Δ' and P1 starts to be received at time T1-Δ".

In order to allow processing of packets P1, PI' and PI" by a single burst mode receiver 21 without loosing data, the said packets need to be synchronized or re-synchronized. As a consequence optical signals received on channels C1 and C2 are transmitted respectively toward a delay line 27 having a fixed delay being the closest to the time differences Δ" and Δ'.

Fig.5 shows the result of a synchronization using the synchronization device 17 presented in figure 3. As the delays of the delay lines 27 are fixed and present an increment with respect to each other, the obtained synchronization is not perfect and small time shifts ε1 and ε2 remain between packet p1 and respectively packet PI' and PI".

Nevertheless, this small time shifts ε1 and ε2 are smaller than half of the increment delay and as described previously, this increment is as small as the number of delay lines 27 is large. As a consequence, without being perfect, the synchronization level provided by the synchronization device 17 is adjusted (by the number of delay lines 27) to be sufficient to allow the correct processing of several packets by a single burst mode receiver. Indeed, the presence of an inter-packet gap between two consecutive packets allows to the burst mode receiver 21 to retrieve packets being not perfectly synchronized by using a burst duration slightly larger than the packet duration tp.

Besides, the chromatic dispersion is not a fixed parameter and may vary over time, for example due to temperature variations, so that chromatic dispersion compensation needs to be adapted to the said variations in order to avoid a drift of the undergone temporal shift large enough so that the time shift of the corresponding packets would lead to a loss of data at the burst mode receiver 21 level.

In the embodiments of the present invention, the flexibility of the WSS 25 is used to achieve such adaptation of the chromatic dispersion variations. Thus, in case of chromatic dispersion variations large enough, a reconfiguration of the WSS 25 allows to transmit the optical signals corresponding to the impacted channels toward delay lines 27 having a delay adapted to the newly undergone chromatic dispersion.

Such adaptation of the chromatic dispersion variations requires detection means adapted to detect a chromatic dispersion variation. According to an embodiment of the present invention, the drift of temporal shift undergone by the packets due to a chromatic dispersion variation is detected at the burst mode receiver 21 level so that the detection means correspond to the at least one burst mode receiver 21.

Indeed, during an initialization step, the at least one burst mode receiver 21 determines the settings allowing a packet to be centered within a burst slot. Then, during normal mode functioning, the said at least one burst mode receiver 21 is capable of detecting a drift of a packet away from the center of the burst slot.

Furthermore, the optical node Ni comprises control means adapted to receive information from the detection means about the undergone temporal shift variations due to the chromatic dispersion variations and process the said information, for example by comparing the value of the temporal shift with a predetermined value over time, in order to detect a drift of said temporal shift larger that said predetermined value on at least one of the channels Cj and trigger the reconfiguration of the WSS 25 if it is necessary to adapt the distribution of the multiplexed optical signals toward the plurality of delay lines 27 to take into account the drift of temporal shift.

The reconfiguration of the WSS 25 is triggered if the chromatic dispersion variation or temporal packet drift in our case exceeds a predetermined value on at least one of the channels, for example, an amount or drift corresponding to half of the delay increment between two consecutive delay lines. However, other conditions can be chosen to trigger the reconfiguration of the WSS 25.

The reconfiguration of WSS 25 allows then to transmit the optical signals corresponding to the channels impacted by a chromatic dispersion variation toward a delay line 27 having a delay adapted to their newly undergone chromatic dispersion. It has to be noted that in the structure described in figure 3, both WSS 25 have to be reconfigured.

Besides, the time required for the reconfiguration of a WSS 25 is much larger than the order of a packet duration. A WSS 25 reconfiguration time is usually larger than 100ms whereas a packet duration is approximately a few micro-seconds. Even if the number of reconfigurations is limited, a few times per day for example, a single reconfiguration would lead to a loss of a large amount of data.

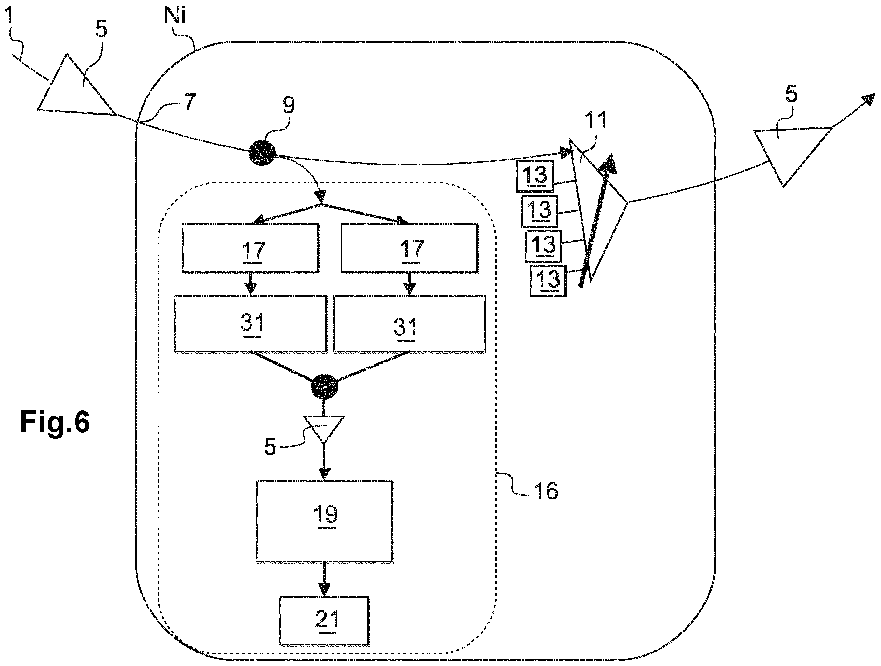

In order to overcome such drawback, figure 6 represents a node structure according to an embodiment of the present invention wherein a second synchronization device 17 is set in parallel to the first synchronization device 17. Thus, when reconfiguration of the WSS 25 of the synchronization device 17 is needed, the said reconfiguration is achieved on the WSS 25 of the unused synchronization device 17 and when the said reconfiguration is done, the newly configured synchronization device is used while the other synchronization device 17 becomes unused.

In order to switch traffic from one synchronisation device 17 to the other in a minimum amount of time and avoid a loss of data potentially induced by the said switching, the node structure described in figure 6 comprises two synchronization device 17 having their input linked to the optical coupler 9 linked itself to the input 7 of the node Ni, the optical coupler 9 transmitting all the optical signals to both synchronization devices 17. The output of each synchronization device 17 is linked to a fast switching optical gate 31. the said fast switching optical gates 31 are configured such that the first one is in a passing mode while the other is in a blocking mode and conversely, the passing mode corresponding to a configuration where all the optical signals received on the input are transmitted to the output and the blocking mode corresponding to a configuration where all the optical signals received on the input are blocked. As the time for the fast switching optical gate 31 to switch from one mode to another is in the range of a few tens of nano-seconds, when using semiconductor optical amplifier (SOA) type of gates, which is shorter than the inter-packet gap duration, the presented structure allows to minimize or avoid the amount of data loss. The output of both gates 31 is linked to an optical coupler 9 to transmit the optical signals toward the optical amplifier 5, the wavelength selector 19 and the burst mode receiver 21.

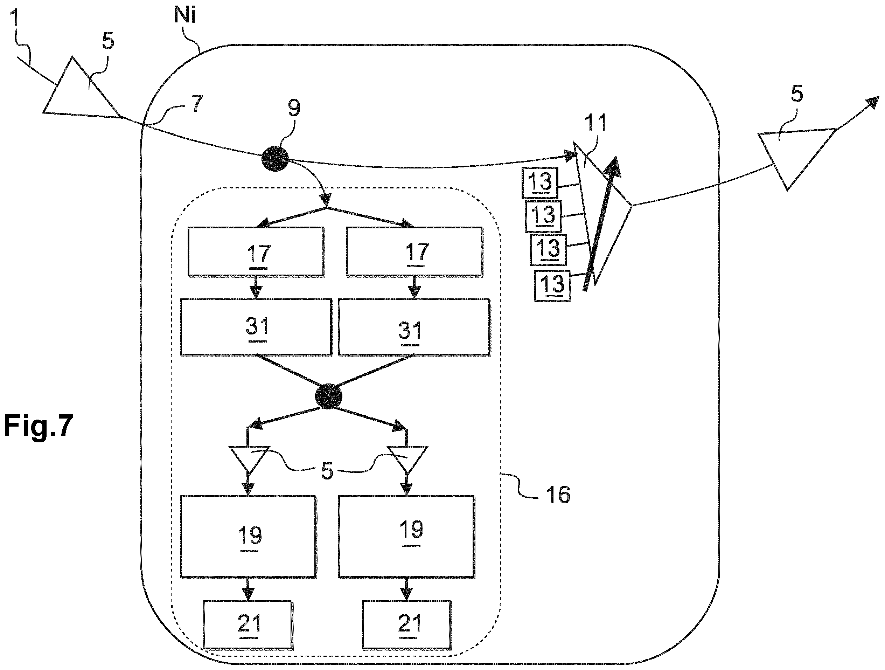

Besides, if it is required by the amount of traffic and the capacity limit of a burst mode receiver 21, a node structure with several wavelength selectors 19 and burst mode receivers 21 working in parallel may also be implemented as represented in figure 7 in the case of the structure presented in figure 6 with two branches in parallel comprising each a wavelength selector 19 and a burst mode receiver 21. Furthermore, it is obvious that such redundancy of wavelength selectors 19 and burst mode receivers 21 can be adapted to the structure presented in figure 2 by introducing an optical coupler 9 linked to the output of the optical amplifier 5 linked itself to the output of the synchronization device 17, the said optical coupler 9 transmitting the optical signals toward the plurality of wavelength selectors 19.

In figure 7, the optical coupler 9 linked to the output of the fast switching optical gates 31 is used to transmit the signals toward the two branches in parallel, each branch comprising an optical amplifier 5, a wavelength selector 19, and a burst mode receiver 21. The distribution between the two burst mode receivers 21 is achieved by the wavelength selectors 19 such that half of the needing to be dropped are transmitted to the first burst mode receiver 21 and the other half is transmitted to the second burst mode receiver 21, all the other channels Cj being blocked by the respective wavelength selectors 19.

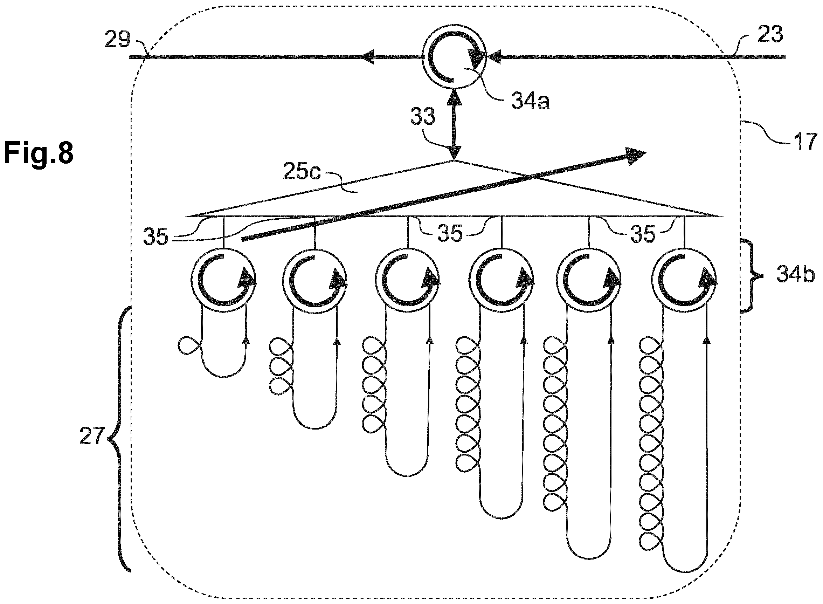

According to another embodiment of the present invention presented in figure 8, the structure of the synchronization device 17 is realized with only one WSS 25 used for both the demultiplexing and the multiplexing. Indeed, as a WSS 25 is reversible, which means that it can be used in both directions, and as the configuration of the WSS 25 is the same for the demultiplexing and the multiplexing, a unique WSS 25 can be used for both the demultiplexing and the multiplexing .

In this embodiment, the input 23 of the synchronization device 17 is linked to an optical circulator 34 which transmit the received multiplexed optical signals to the multiplexed ports 33 of the WSS 25. Each demultiplexed port 35 of the WSS 25 is linked to an optical circulator 34 and the delay lines 27 are looped on the said optical circulators 34 so that the demultiplexed optical signals coming from the demultiplexed ports 35 are transmitted through the optical circulators 34 to the corresponding delay lines 27 and then back to the optical circulators 34 and the demultiplexed ports 35 after transmission through the delay lines 27. The synchronized demultiplexed optical signals are then re-multiplexed by the WSS 25. The re-multiplexed optical signals are then transmitted back to the optical circulator 34 linked to the multiplexed port 33 of the WSS 25 and sent to the output 29 of the synchronization device 17. Such synchronization device 17 can also be implemented in a node structure as presented in figures 2, 6 and 7.

In order to better understand the embodiments of the present invention, an example will now be described based on an optical node N3 located on an optical ring line 1 comprising 20 WDM channels C1, C2...C20 among which 3, for example C1, C2 and C3 are reserved for the emission of the optical node N3 and wherein the required synchronization accuracy corresponds to an inter-packet gap being 35% of the time slot duration (in practice, the number of WDM channels and the required synchronization accuracy are higher).

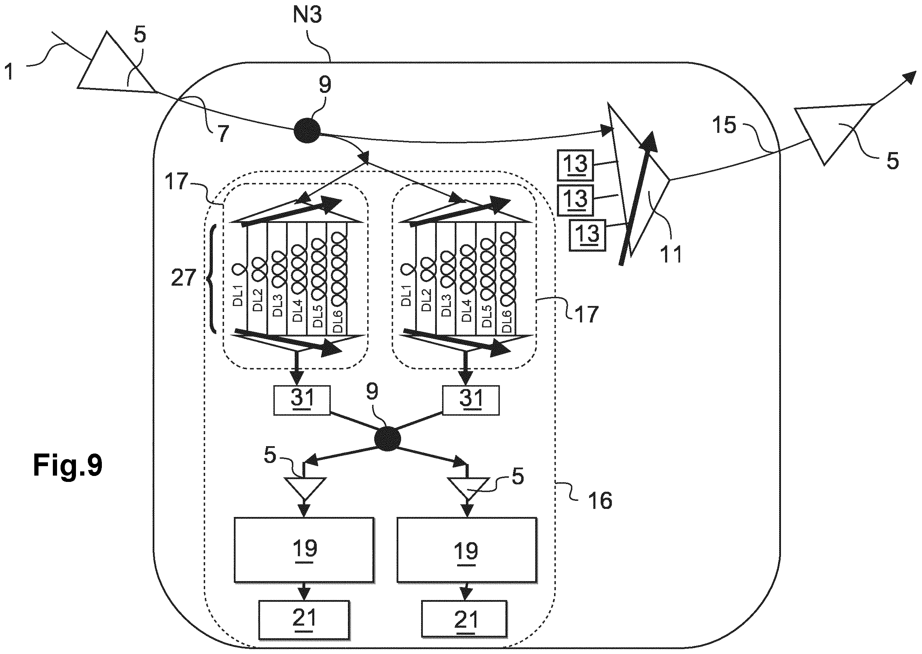

A 35% ratio of the inter-packet gap to the time slot duration corresponds to a synchronization accuracy of 35/2≈17% so that the required number of delay lines is 1/0,17≈6. Thus the synchronisation devices used in the present example comprise 6 delay lines noted DL1, DL2, DL3, DL4, DL5 and DL6 as represented in figure 9.
During an initialization step, using for example test packets, it is determined that the synchronization device of node N3 has to be configured as given below:
- channels C1, C2, C3 do not have packets to be dropped to node N3 and can therefore be blocked by the WSS of the synchronization device.
- channels C4, C5, C6 are transmitted to DL1,
- channels C7, C8, C9, C10, C11 are transmitted to DL2,
- channels C11, C12, C13, C14, C15 are to be transmitted to DL3 and,
- channels C16, C17, C18, C19, C20 are transmitted to DL4.

A synchronization device 17, for example the first one located on the left, is then configured accordingly, which means the gate 31 linked to said first WSS 25 is in a passing mode.

Furthermore, in the present example, the burst mode receivers 21 cannot process more than 10 different packets at a time (in practice, this capacity is much higher).

Thus, the first wavelength selector 19 is configured to transmit the optical packets of the channels C4 to C12 toward the first burst mode receiver 21 and to block the other channels and the second wavelength selector 19 is configured to transmit the optical packets of the channels C13 to C20 toward the second burst mode receiver 21 so that each burst mode receiver 21 has less than 10 packets at a time to process.
Besides transmitters 13 are configured to emit optical signals respectively on wavelength corresponding to channel C1, C2 and C3. The emitted optical signals may be destined to any other nodes located on the optical ring line 1.
When configuration of all the nodes located on the ring line 1 is over, optical signals comprising data packets can be transmitted between the different nodes.
Later, the temperature along the ring line 1 has changed so that the chromatic dispersion has changed and the temporal shifts between the transmitted packets have changed.

Thus, a drift of the optical packets is observed at the burst mode receivers 21 level. The information of this drift is transmitted from the burst mode receivers to the control means of the synchronization device 17 so that when, for example, this drift reaches a predetermined reconfiguration threshold for channels C15 and C20, a reconfiguration of the WSS 25 is triggered.
The said reconfiguration comprises the determination of the delay lines 17 toward which the optical signals of the channels C15 and C20 have to be transmitted. The new determined configuration is as given below:
- channels C4, C5, C6 are transmitted to DL1,
- channels C7, C8, C9, C10, C11 are transmitted to DL2,
- channels C11, C12, C13, C14 are to be transmitted to DL3,
- channels C15, C16, C17, C18, C19, C20 are transmitted to DL4 and,
- channels C20 is transmitted to DL5.

As the optical signals currently (at the time of the reconfiguration) processed by the burst mode receivers 21 are transmitted through the first synchronisation device 17 (due to the gates 31 configuration), the newly determined configuration is applied on the WSS 25 of the second synchronization 17 device located on the right and when the reconfiguration of the WSS 25 of the second synchronization device 17 is over, the gates 31 are switched so that the one linked to the first synchronization device 17 becomes in a blocking mode whereas the one linked to the second synchronization device 17 becomes in a passing mode. If, afterwards, another reconfiguration of the synchronization device is needed, such reconfiguration will then be achieved on the first synchronization device 17 and so on. Thus, such method allows an adaptation of the reception equipment 16 according to the chromatic dispersion variations without leading to a loss of data.

Thus, the structure of the synchronization device 17 and the optical node Ni according to the embodiments of the present invention allows the synchronization of the optical signals without requiring chromatic dispersion compensation equipments, allows to limit the number of required delay line 27 according to the required synchronization accuracy and allow to adapt to the chromatic dispersion variations thanks to the flexibility of the WSS 25. As a consequence, the presented structures allow to introduce a point-to-multipoint capability to the metro layer without requiring sophisticated and expensive devices to compensate for the chromatic dispersion effects and are compatible to considered future technologies using advanced modulation formats such as Polarization-Division Multiplexed-Quadrature Phase Shift Keying (PDM-QPSK) with coherent detection.

## Claims

1. Synchronization device (17) for synchronizing a plurality of multiplexed optical signals after transmission through a plurality of wavelength division multiplexing channels (Cj) along an optical line (1), the said optical signals comprising data packets aimed at being detected separately and inter-packet gaps, the duration of a data packet and an inter-packet gap corresponding to the duration of a time slot, the said synchronization device (17) comprising:
- a plurality of delay lines (27) having distinct fixed delays,
- **characterised by** a wavelength selective switch (25c) configured to:
- receive the said plurality of multiplexed optical signals,
- demultiplex the said plurality of received multiplexed optical signals and,
- distribute the demultiplexed optical signals toward the said plurality of delay lines (27) according to a temporal shift of the demultiplexed optical signals with respect to the start of the next period of a periodic temporal reference corresponding to the duration of a time slot, a demultiplexed optical signal being transmitted to a delay line (27) having the closest fixed delay with respect to the temporal shift of the said optical demultiplexed optical signal,
and wherein the number of delay lines (27) is determined according to the required accuracy for the synchronization of the optical signals
wherein the synchronization device (17) also comprises a plurality of optical circulators (34), the number of which corresponds to the number of delay lines (27), located between the wavelength selective switch (25c) and the plurality of delay lines (27), the said delay lines (27) being looped on the said optical circulators (34) so that the synchronized optical signals at the output of the delay lines (27) are sent back to the wavelength selective switch (25c) to be multiplexed and wherein the wavelength selective switch (25c) is also configured to multiplex the demultiplexed synchronized optical signals received from the plurality of delay lines (27).

2. Synchronization device (17) in accordance with claim 1 wherein it comprises control means adapted to:
- receive information about a change in the temporal shift of demultiplexed optical signals with respect to the start of the next period of a periodic temporal reference,
- compare the said temporal shift with a predetermined value over time in order to detect a drift of the said temporal shift,
in case of a drift of the said temporal shift larger than the predetermined value on at least one channel,
- trigger a reconfiguration of the wavelength selective switch (25c) to adapt the distribution of the demultiplexed optical signals toward the plurality of delay lines (27) to take into account the drift of the said temporal shift.

3. Synchronisation device (17) in accordance with one of the previous claims wherein the time slots are of equal duration (Ts) and wherein the delays of the delay lines (27) correspond to an arithmetic progression with an increment equal to the duration of the time slot divided by the number of delay lines.

4. Synchronisation device (17) in accordance with claim 3 wherein the required accuracy for the synchronization of the optical signals is related to a desired ratio between the inter-packet gap duration (tg) and the duration of the time slot so that the number of delay lines (27) is determined in function of the said desired ratio, the required number of delay lines (27) being equal to the closest integer being equal or higher than two divided by the said desired ratio.

5. Optical node (Ni) located in a point to multi-point optical line (1) transmitting optical signals comprising data packets through wavelength division multiplexing channels (Cj), the said optical node (Ni) comprising:
- a reception equipment (16) and,
- an optical coupler (9) configured to transmit the optical signals received on the line (1) toward the reception equipment (16),
wherein the reception equipment (16) comprises:
- a synchronization device (17) in accordance with one of the previous claims,
- at least one wavelength selector (19) linked to the synchronization equipment configured to select a wavelength channel comprising a data packet needing to be dropped,
- at least one burst mode receiver (21) linked to the at least one wavelength selector (19) configured to retrieve data of the data packet transmitted by the said at least one wavelength selector (19).

6. Optical node (Ni) in accordance with claim 5 wherein it comprises a second synchronization device (17) set in parallel of the first synchronization device (17) and a first and a second fast switching optical gate (31) linked respectively to the first and second synchronization equipment (17) and configured so that the first fast switching optical gate is in a passing mode while the second is in a blocking mode and conversely in order to transmit the optical signals outputted by one of the synchronization devices (17) and allow reconfiguration of a synchronization device (17) without loosing data.

7. Optical node in accordance with claim 5 or 6 wherein it comprises an optical amplifier (5) in between the at least one synchronization device (17) and the at least one wavelength selector (19).

8. Method for synchronizing a plurality of multiplexed optical signals after transmission through a plurality of wavelength division multiplexing channels (Cj) along an optical line (1), the said optical signals comprising data packets aimed at being detected separately and inter-packet gaps, the duration of a data packet and an inter-packet gap corresponding to the duration of a time slot, **characterized in that** the said method comprises the following steps:
- demultiplexing the said plurality of received multiplexed optical signals with a wavelength selective switch (25c) and,
- distributing, with the said wavelength selective switch (25c), the demultiplexed optical signals toward a plurality of delay lines (27) having fixed distinct delays according to a temporal shift of the demultiplexed optical signals with respect to the start of the next period of a periodic temporal reference corresponding to the duration of a time slot, a demultiplexed optical signal being transmitted to a delay line (27) having the closest fixed delay with respect to the temporal shift of the said demultiplexed optical signal, the number of delay lines (27) being determined according to the required accuracy for the synchronization of the optical signals,
- multiplexing the synchronized optical signals at the outputs of the delay lines (27) by the said wavelength selective switch (25c) using a plurality of optical circulators (34), the number of which corresponds to the number of delay lines (27), located between the wavelength selective switch (25c) and the plurality of delay lines (27), the said delay lines (27) being looped on the said optical circulators (34) so that the synchronized optical signals at the output of the delay lines (27) are sent back to the wavelength selective switch (25c).

9. Method in accordance with claim 8 wherein:
- the time slots are of equal duration (Ts),
- the delays of the delay lines (27) correspond to an arithmetic progression with an increment corresponding to the duration of the time slot (Ts) divided by the number of delay lines (27),
- the number of delay lines (27) is determined in function of the desired ratio between the inter-packet gap duration and the time slot duration, the required number of delay lines (27) being equal to the closest integer being equal or higher than two divided by the said desired ratio.

10. Method in accordance with one of the claim 8 to 9 wherein in case of a drift of the temporal shift on at least one of the channels (Cj) larger than a predetermined value, the wavelength selective switch (25c) is reconfigured in order to adapt the distribution according to the modified value of the temporal shift.

11. Method in accordance with claim 10 taken in combination with claim 9 wherein the predetermined value corresponds to a drift of half the increment.

## Patentansprüche

1. Synchronisationsvorrichtung (17) zum Synchronisieren mehrerer gemultiplexter optischer Signale nach einer Übertragung durch mehrere Wellenlängenmultiplex-Kanäle (Cj) entlang einer optischen Leitung (1), wobei die optischen Signale Datenpakete, die darauf abzielen, separat detektiert zu werden, und Inter-Paket-Lücken umfassen, wobei die Dauer eines Datenpakets und einer Inter-Paket-Lücke der Dauer eines Zeitschlitzes entspricht, wobei die Synchronisationsvorrichtung (17) Folgendes umfasst:
- mehrere Verzögerungsleitungen (27) mit eindeutigen festen Verzögerungen,
- **dadurch gekennzeichnet dass** die synchronisationsvorrichtung (17) einen wellenlängenselektiven Schalter (25c) umfasst, der zu Folgendem konfiguriert ist:
- Empfangen der mehreren gemultiplexten optischen Signale,
- Demultiplexen der mehreren empfangenen gemultiplexten optischen Signale, und
- Verteilen der demultiplexten optischen Signale zu den mehreren Verzögerungsleitungen (27) gemäß einer zeitlichen Verschiebung der demultiplexten optischen Signale mit Bezug auf den Beginn der nächsten Periode einer periodischen zeitlichen Referenz, die der Dauer eines Zeitschlitzes entspricht, wobei ein demultiplextes optisches Signal an eine Verzögerungsleitung (27) mit der nächsten festen Verzögerung mit Bezug auf die zeitliche Verschiebung des optischen demultiplexten optischen Signals übertragen wird,
wobei die Anzahl der Verzögerungsleitungen (27) gemäß der erforderlichen Genauigkeit für die Synchronisation der optischen Signale bestimmt wird,
wobei die Synchronisationsvorrichtung (17) auch mehrere optische Zirkulatoren (34) umfasst, deren Anzahl der Anzahl der Verzögerungsleitungen (27) entspricht und die sich zwischen dem wellenlängenselektiven Schalter (25c) und den mehreren Verzögerungsleitungen (27) befinden, wobei sich die Verzögerungsleitungen (27) in einer Schleife auf den optischen Zirkulatoren (34) befinden, sodass die synchronisierten optischen Signale an dem Ausgang der Verzögerungsleitungen (27) zurück an den wellenlängenselektiven Schalter (25c) gesendet werden, um gemultiplext werden, und wobei der wellenlängenselektive Schalter (25c) auch dazu konfiguriert ist, die demultiplexten synchronisierten optischen Signale, die von den mehreren Verzögerungsleitungen (27) empfangen werden, zu multiplexen.

2. Synchronisationsvorrichtung (17) nach Anspruch 1, wobei sie ein Steuermittel umfasst, das zu Folgendem eingerichtet ist:
- Empfangen von Informationen über eine Änderung der zeitlichen Verschiebung von demultiplexten optischen Signalen in Bezug auf den Anfang der nächsten Periode einer periodischen zeitlichen Referenz,
- Vergleichen der zeitlichen Verschiebung mit einem vorbestimmten Wert über die Zeit, um einen Drift der zeitlichen Verschiebung zu detektieren,
falls ein Drift der zeitlichen Verschiebung größer als der vorbestimmte Wert auf wenigstens einem Kanal ist,
- Auslösen einer Rekonfiguration des wellenlängenselektiven Schalters (25c), um die Verteilung der demultiplexten optischen Signale zu den mehreren Verzögerungsleitungen (27) anzupassen, um den Drift der zeitlichen Verschiebung zu berücksichtigen.

3. Synchronisationsvorrichtung (17) nach einem der vorhergehenden Ansprüche, wobei die Zeitschlitze von gleicher Dauer (Ts) sind und wobei die Verzögerungen der Verzögerungsleitungen (27) einer arithmetischen Progression mit einem Inkrement gleich der Dauer des Zeitschlitzes geteilt durch die Anzahl an Verzögerungsleitungen entsprechen.

4. Synchronisationsvorrichtung (17) nach Anspruch 3, wobei die erforderliche Genauigkeit für die Synchronisation der optischen Signale in Bezug zu einem gewünschten Verhältnis zwischen der Inter-Paket-Lücke-Dauer (tg) und der Dauer des Zeitschlitzes steht, sodass die Anzahl der Verzögerungsleitungen (27) als Funktion des gewünschten Verhältnisses bestimmt wird, wobei die erforderliche Anzahl der Verzögerungsleitungen (27) gleich der nächsten ganzen Zahl gleich oder größer als zwei geteilt durch das gewünschte Verhältnis ist.

5. Optischer Knoten (Ni), der sich in einer optischen Punkt-Zu-Multipunkt-Leitung (1) befindet, die optische Signale, die Datenpakete umfassen, durch Wellenlängenmultiplex-Kanäle (Cj) überträgt, wobei der optische Knoten (Ni) Folgendes umfasst:
- eine Empfangsausrüstung (16), und
- einen optischen Koppler (9), der zum Übertragen der optischen Signale, die von der Leitung (1) empfangen werden, an die Empfangsausrüstung (16) konfiguriert ist,
wobei die Empfangsausrüstung (16) Folgendes umfasst:
- eine Synchronisationsvorrichtung (17) nach einem der vorhergehenden Ansprüche,
- wenigstens einen Wellenlängenselektor (19), der mit der Synchronisationsausrüstung verknüpft ist und zum Auswählen eines Wellenlängenkanals konfiguriert ist, der ein Datenpaket umfasst, das gestrichen werden muss,
- wenigstens einen Burst-Modus-Empfänger (21), der mit dem wenigstens einen Wellenlängenselektor (19) verknüpft ist und zum Wiederherstellen von Daten des Datenpakets konfiguriert ist, das durch den wenigstens einen Wellenlängenselektor (19) übertragen wird.

6. Optischer Knoten (Ni) nach Anspruch 5, wobei er eine zweite Synchronisationsvorrichtung (17), die parallel zu der ersten Synchronisationsvorrichtung (17) gesetzt ist, und ein erstes und zweites schnell schaltendes optisches Gatter (31) umfasst, die mit der ersten bzw. zweiten Synchronisationsausrüstung (17) verknüpft sind und so konfiguriert sind, dass sich das erste schnell schaltende optische Gatter in einem Durchlassmodus befindet, während sich das zweite schnell schaltende optische gatter in einem Sperrmodus befindet und umgekehrt, um die optischen Signale, die durch eine der Synchronisationsvorrichtungen (17) ausgegeben werden, zu übertragen und eine Rekonfiguration einer Synchronisationsvorrichtung (17) ohne Datenverlust zu ermöglichen.

7. Optischer Knoten (Ni) nach Anspruch 5 oder 6, wobei er einen optischen Verstärker (5) zwischen der wenigstens einen Synchronisationsvorrichtung (17) und dem wenigstens einen Wellenlängenselektor (19) umfasst.

8. Verfahren zum Synchronisieren mehrerer gemultiplexter optischer Signale nach einer Übertragung durch mehrere Wellenlängenmultiplex-Kanäle (Cj) entlang einer optischen Leitung (1), wobei die optischen Signale Datenpakete, die darauf abzielen, separat detektiert zu werden, und Inter-Paket-Lücken umfassen, wobei die Dauer eines Datenpakets und einer Inter-Paket-Lücke der Dauer eines Zeitschlitzes entspricht, **dadurch gekennzeichnet, dass** das Verfahren die folgenden Schritte umfasst:
- Demultiplexen der mehreren empfangenen gemultiplexten optischen Signale mit einem wellenlängenselektiven Schalter (25c), und
- Verteilen, mit dem wellenlängenselektiven Schalter (25c), der demultiplexten optischen Signale zu mehreren Verzögerungsleitungen (27) mit festen eindeutigen Verzögerungen gemäß einer zeitlichen Verschiebung der demultiplexten optischen Signale mit Bezug auf den Beginn der nächsten Periode einer periodischen zeitlichen Referenz, die der Dauer eines Zeitschlitzes entspricht, wobei ein demultiplextes optisches Signal an eine Verzögerungsleitung (27) mit der nächsten festen Verzögerung mit Bezug auf die zeitliche Verschiebung des demultiplexten optischen Signals übertragen wird, wobei die Anzahl der Verzögerungsleitungen (27) gemäß der erforderlichen Genauigkeit für die Synchronisation der optischen Signale bestimmt wird,
- Multiplexen der synchronisierten optischen Signale an den Ausgängen der Verzögerungsleitungen (27) durch den wellenlängenselektiven Schalter (25c) unter Verwendung mehrerer optischer Zirkulatoren (34), deren Anzahl der Anzahl der Verzögerungsleitungen (27) entspricht und die sich zwischen dem wellenlängenselektiven Schalter (25c) und den mehreren Verzögerungsleitungen (27) befinden, wobei sich die Verzögerungsleitungen (27) in einer Schleife auf den optischen Zirkulatoren (34) befinden, sodass die synchronisierten optischen Signale an dem Ausgang der Verzögerungsleitungen (27) zurück an den wellenlängenselektiven Schalter (25c) gesendet werden.

9. Verfahren nach Anspruch 8, wobei:
- die Zeitschlitze von gleicher Dauer (Ts) sind,
- die Verzögerungen der Verzögerungsleitungen (27) einer arithmetischen Progression mit einem Inkrement entsprechend der Dauer des Zeitschlitzes (Ts) geteilt durch die Anzahl an Verzögerungsleitungen (27) entsprechen,
- die Anzahl der Verzögerungsleitungen (27) als Funktion des gewünschten Verhältnisses zwischen der Inter-Paket-Lücke-Dauer und der Zeitschlitzdauer bestimmt wird, wobei die erforderliche Anzahl der Verzögerungsleitungen (27) gleich der nächsten ganzen Zahl gleich oder größer als zwei geteilt durch das gewünschte Verhältnis ist.

10. Verfahren nach Anspruch 8 oder 9, wobei, falls ein Drift der zeitlichen Verschiebung auf wenigstens einem der Kanäle (Cj) größer als ein vorbestimmter Wert ist, der wellenlängenselektive Schalter (25c) rekonfiguriert wird, um die Verteilung gemäß dem modifizierten Wert der zeitlichen Verschiebung anzupassen.

11. Verfahren nach Anspruch 10 in Kombination mit Anspruch 9, wobei der vorbestimmte Wert einem Drift des halben Inkrements entspricht.

## Revendications

1. Dispositif de synchronisation (17) pour la synchronisation d'une pluralité de signaux optiques multiplexés après la transmission au travers d'une pluralité de canaux (Cj) de multiplexage par division de longueur d'onde le long d'une ligne optique (1), lesdits signaux optiques comprenant des paquets de données destinés à être détectés séparément et des intervalles entre paquets, la durée d'un paquet de données et d'un intervalle entre paquets correspondant à la durée d'un créneau temporel, ledit dispositif de synchronisation (17) comprenant :
- une pluralité de lignes à retard (27) ayant des retards fixes distincts,
**caractérisé en ce qu'**il comprend également un commutateur sélectif en longueur d'onde (25c) configuré pour :
- recevoir ladite pluralité de signaux optiques multiplexés,
- démultiplexer ladite pluralité de signaux optiques multiplexés reçus et,
- distribuer les signaux optiques démultiplexés vers ladite pluralité de lignes à retard (27) conformément à un décalage temporel des signaux optiques démultiplexés par rapport au début de la prochaine période d'une référence temporelle périodique correspondant à la durée d'un créneau temporel, un signal optique démultiplexé étant transmis à une ligne à retard (27) ayant le retard fixe le plus proche par rapport au décalage temporel dudit signal optique démultiplexé,
et **en ce que** le nombre de lignes à retard (27) est déterminé en fonction de la précision exigée pour la synchronisation des signaux optiques,
le dispositif de synchronisation (17) comprenant également une pluralité de circulateurs optiques (34), dont le nombre correspond au nombre de lignes à retard (27), situés entre le commutateur sélectif en longueur d'onde (25c) et la pluralité de lignes à retard (27), lesdites lignes à retard (27) étant bouclées sur lesdits circulateurs optiques (34) de sorte que les signaux optiques synchronisés à la sortie de lignes à retard (27) soient renvoyés au commutateur sélectif en longueur d'onde (25c) pour être multiplexés et le commutateur sélectif en longueur d'onde (25c) étant également configuré pour multiplexer les signaux optiques synchronisés démultiplexés reçus de la part de la pluralité de lignes à retard (27).

2. Dispositif de synchronisation (17) selon la revendication 1, comprenant des moyens de commande adaptés pour :
- recevoir des informations à propos d'une modification dans le décalage temporel des signaux optiques démultiplexés par rapport au début de la prochaine période d'une référence temporelle périodique,
- comparer ledit décalage temporel avec une valeur prédéterminée dans le temps afin de détecter une dérive dudit décalage temporel,
dans le cas d'une dérive dudit décalage temporel qui est supérieure à la valeur prédéterminée sur au moins un canal,
- déclencher une reconfiguration du commutateur sélectif en longueur d'onde (25c) afin d'adapter la distribution des signaux optiques démultiplexés vers la pluralité de lignes à retard (27) pour prendre en compte la dérive dudit décalage temporel.

3. Dispositif de synchronisation (17) selon l'une des revendications précédentes, dans lequel les créneaux temporels étant de durée (T_{S}) égale et les retards des lignes à retard (27) correspondant à une progression arithmétique avec un incrément égal à la durée des créneaux temporels divisée par le nombre de lignes à retard.

4. Dispositif de synchronisation (17) selon la revendication 3, dans lequel la précision exigée de la synchronisation des signaux optiques est rapportée à un ratio souhaité entre la durée des intervalles entre paquets (tg) et la durée du créneau temporel, de sorte que le nombre de lignes à retard (27) est déterminé en fonction dudit ratio souhaité, le nombre exigé de lignes à retard (27) étant égal au nombre entier le plus proche qui est égal ou supérieur à deux divisé par ledit ratio souhaité.

5. Noeud optique (Ni) situé dans une ligne optique (1) point à multipoint transmettant des signaux optiques comprenant des paquets de données au travers de canaux (Cj) de multiplexage par division de longueur d'onde, ledit noeud optique (Ni) comprenant :
- un équipement de réception (16) et
- un coupleur optique (9) configuré pour transmettre les signaux optiques reçus sur la ligne (1) vers l'équipement de réception (16),
l'équipement de réception (16) comprenant :
- un dispositif de synchronisation (17) selon l'une des revendications précédentes,
- au moins un sélecteur de longueur d'onde (19) relié à l'équipement de synchronisation et configuré pour sélectionner un canal de longueur d'onde comprenant un paquet de données qu'il faut extraire,
- au moins un récepteur (21) en mode rafale relié à l'au moins un sélecteur de longueur d'onde (19) et configuré pour récupérer des données du paquet de données transmis par l'au moins un sélecteur de longueur d'onde (19).

6. Noeud optique (Ni) selon la revendication 5, comprenant un deuxième dispositif de synchronisation (17) monté en parallèle du premier dispositif de synchronisation (17) ainsi que des première et deuxième portes optiques (31) à commutation rapide respectivement reliées aux premier et deuxième équipements de synchronisation (17) et configurées de telle sorte que la première porte optique à commutation rapide se trouve dans un mode passant pendant que la deuxième porte optique à commutation rapide se trouve dans un mode de blocage et inversement, afin de transmettre les signaux optiques délivrés par l'un des dispositifs de synchronisation (17) et permettre la reconfiguration d'un dispositif de synchronisation (17) sans pertes de données.

7. Noeud optique (Ni) selon la revendication 5 ou 6, comprenant un amplificateur optique (5) entre l'au moins un dispositif de synchronisation (17) et l'au moins un sélecteur de longueur d'onde (19).

8. Procédé de synchronisation d'une pluralité de signaux optiques multiplexés après la transmission au travers d'une pluralité de canaux (Cj) de multiplexage par division de longueur d'onde le long d'une ligne optique (1), lesdits signaux optiques comprenant des paquets de données destinés à être détectés séparément et des intervalles entre paquets, la durée d'un paquet de données et d'un intervalle entre paquets correspondant à la durée d'un créneau temporel, **caractérisé en ce que** le procédé comprend les étapes suivantes :
- démultiplexage de ladite pluralité de signaux optiques multiplexés reçus avec un commutateur sélectif en longueur d'onde (25c) et,
- distribution, avec ledit commutateur sélectif en longueur d'onde (25c), des signaux optiques démultiplexés vers une pluralité de lignes à retard (27) ayant des retards fixes conformément à un décalage temporel des signaux optiques démultiplexés par rapport au début de la prochaine période d'une référence temporelle périodique correspondant à la durée d'un créneau temporel, un signal optique démultiplexé étant transmis à une ligne à retard (27) ayant le retard fixe le plus proche par rapport au décalage temporel dudit signal optique démultiplexé, le nombre de lignes à retard (27) étant déterminé en fonction de la précision exigée pour la synchronisation des signaux optiques,
- multiplexage des signaux optiques synchronisés à la sortie de lignes à retard (27) par ledit commutateur sélectif en longueur d'onde (25c) en utilisant une pluralité de circulateurs optiques (34), dont le nombre correspond au nombre de lignes à retard (27), situés entre le commutateur sélectif en longueur d'onde (25c) et la pluralité de lignes à retard (27), lesdites lignes à retard (27) étant bouclées sur lesdits circulateurs optiques (34) de sorte que les signaux optiques synchronisés à la sortie de lignes à retard (27) soient renvoyés au commutateur sélectif en longueur d'onde (25c).

9. Procédé selon la revendication 8, selon lequel :
- les créneaux temporels sont de durée (T_{S}) égale,
- les retards des lignes à retard (27) correspondent à une progression arithmétique avec un incrément correspondant à la durée du créneau temporel (T_{S}) divisée par le nombre de lignes à retard (27),
- le nombre de lignes à retard (27) est déterminé en fonction du ratio souhaité entre la durée des intervalles entre paquets et la durée du créneau temporel, le nombre exigé de lignes à retard (27) étant égal au nombre entier le plus proche qui est égal ou supérieur à deux divisé par ledit ratio souhaité.

10. Procédé selon l'une des revendications 8 ou 9, selon lequel, dans le cas d'une dérive du décalage temporel sur au moins un canal (Cj) supérieure à une valeur prédéterminée, le commutateur sélectif en longueur d'onde (25c) est reconfiguré afin d'adapter la distribution conformément à la valeur modifiée du décalage temporel.

11. Procédé selon la revendication 10 considérée en combinaison avec la revendication 9, selon lequel la valeur prédéterminée correspond à une dérive de la moitié de l'incrément.
